# EUROPEAN PATENT APPLICATION

(11) **EP 2 264 625 A1**
(43) Date of publication of application: **22.12.2010**
(21) Application number: 09731011.4
(22) Date of filing: 30.03.2009
(51) Int. Cl.: G06F 17/30

(54) **SEARCH METHOD, DEVICE AND SYSTEM**

(30) Priority: 11.04.2008 CN 200810091059
(71) Applicant: Huawei Technologies Co., Ltd., Longgang District, Shenzhen Guangdong 518129 (CN)
(72) Inventor: LI, Zhengbing, Guangdong 518129 (CN); GU, Chong, Guangdong 518129 (CN); HU, Hanqiang, Guangdong 518129 (CN); MIN, Guobing, Guangdong 518129 (CN); DONG, Xiaoyi, Guangdong 518129 (CN)
(74) Representative: Pfenning, Meinig & Partner GbR
(86) International application number: PCT/CN2009/071063
(87) International publication number: WO 2009/124480

(57) **Abstract**

A search method, device, and system are provided. The search method includes the following steps. A control platform selects a corresponding search engine according to a search request received from a user. The control platform acquires user information required by the selected search engine for carrying out search. The control platform sends the user information and the search request to the search engine, so as to enable the search engine to carry out data search according to the user information and the search request. A system and related device are further provided.

## Description

The application claims priority to Chinese Patent Application No. 200810091059.0, filed with the Chinese Patent Office on April 11, 2008, and entitled "SEARCH METHOD, DEVICE AND SYSTEM", which is incorporated herein by reference in its entirety.

### FIELD OF THE TECHNOLOGY

The present invention relates to the field of communications technologies, and more particularly to a search method, device, and system.

### BACKGROUND OF THE INVENTION

With the development of network technologies, the search engine has almost become a mandatory tool in Internet information retrieval; however, extreme expansion of Internet information has caused enormous difficulty to information finding. Although a good search engine may provide abundant information resources and help a user to find the desired information based on a priority algorithm, currently numerous preferred search engine cannot accurately acquire valuable Internet information resources due to the inadequate understanding of the requirements of the user, which is caused by the difficulty in acquiring the personalized information of the user.

A search method providing brief user files (profiles) to a search engine by a searching proxy for carrying out search is provided in the prior art, which specifically includes the following steps.

In step 1, a user inputs a search condition through a client.

In step 2, the client sends search request information to a search proxy server, where the search request information carries the search condition.

In step 3, the search proxy server acquires user information of the user based on a user identifier in the search request information, establishes a user profile according to the user information, and sends the user profile and the search request information to a search engine.

In step 4, the search engine searches for data in an information server according to the search condition in the search request information, processes the searched information according to the user information in the user profile following a pre-defined rule so as to obtain information about search results, and sends the information about search results to the search proxy server.

In step 5, the search proxy server forwards the information about search results to the client.

The inventors found during the process of implementing the present invention that the above method may utilize personalized information of a user at a certain extent, due to the use of the user profile in search; however, in the above scheme, the search proxy server may only provide personalized service support for a fixed search engine, and cannot meet the demand of the continuously increasing professional vertical search engine at present. Therefore, more search results or more accurate search results cannot be provided for a user; accordingly, the user experience is decreased.

### SUMMARY OF THE INVENTION

The present invention is directed to a search method, device, and system, so as to improve the user experience.

In an embodiment, the present invention provides a search method, which includes the following steps. A control platform selects a corresponding search engine according to a search request received from a user. The control platform acquires user information required by the selected search engine for carrying out search. The control platform sends the user information and the search request to the search engine, so as to enable the search engine to carry out the data search according to the user information and the search request.

In an embodiment, the present invention provides a search system, which includes a control platform and a search engine. The control platform is configured to select a corresponding search engine according to a search request received from a user, acquire user information required by the selected search engine for carrying out search, and send the user information and the search request to the search engine. The search engine is configured to carry out the data search according to the user information and the search request received from the control platform, and feed back search results to the control platform.

In an embodiment, the present invention provides a control platform, which includes a request receiving unit, a selection unit, a user information query unit, and a request sending unit. The request receiving unit is configured to receive a search request sent from a user. The selection unit is configured to select a corresponding search engine according to the search request sent from the user. The user information query unit is configured to query, according to registration information of the selected search engine, for user information required by the selected search engine for carrying out search. The request sending unit is configured to send the user information and the search request to the search engine.

In an embodiment, the present invention provides a control platform, which includes a request receiving unit, a selection unit, a registration information acquiring unit, and a search condition sending unit. The request receiving unit is configured to receive a search request sent from a user. The selection unit is configured to select a corresponding search engine according to the search request sent from the user. The registration information acquiring unit is configured to acquire registration information of the selected search engine. The search condition sending unit is configured to send, through a corresponding interface of the registration information, a search condition including the search request and false ID information of the user, to the search engine.

In an embodiment, the present invention provides a search engine, which includes an information receiving unit, a query unit, a search unit, and a feedback unit. The information receiving unit is configured to receive false ID information and a search request sent from a control platform. The query unit is configured to query for user information, required by the selected search engine for carrying out search, from a user information archive base according to the received false ID information. The search unit is configured to search data according to the user information found and the search request, so as to obtain search results. The feedback unit is configured to feed back the search results to the control platform.

In an embodiment, the present invention provides a search engine registration information base, which includes a receiving unit, an issuing unit, a distribution unit, and a sending unit. The receiving unit is configured to receive own capability information and personalized support information sent from a search engine, and receive a personalized information template sent from a user information archive base. The issuing unit is configured to issue the personalized support information of the search engine according to the personalized information template. The distribution unit is configured to distribute an identifier to the search engine. The sending unit is configured to send the identifier of the search engine and the personalized support information acquired by the search engine to the user information archive.

In an embodiment, the present invention provides a user information archive base, which includes a collection unit, a template processing unit, and a receiving unit. The collection unit is configured to collect personalized information from each personalized information source. The template processing unit is configured to generate a personalized information template according to the personalized information, and send the personalized information template to a search engine registration information base. The receiving unit is configured to receive an identifier of a search engine and personalized support information acquired by the search engine, sent from the search engine registration information base.

It can be seen from the above technical solutions that the present invention has the following advantages.

According to the present invention, the control platform may select a corresponding search engine according to the search request of the user, and provide user information required by the search engine for carrying out data search, so that the selected search engine may carry out data search according to the user information and the search request, and thus the control platform may use various types of search engines to provide search service for a user in application, and thus the user experience is improved.

### BRIEF DESCRIPTION OF THE DRAWINGS

FIG. 1 is a flow chart of a search method according to an embodiment of the present invention;
FIG. 2 is a flow chart of a search method according to another embodiment of the present invention;
FIG. 3 is a schematic view of a search system according to an embodiment of the present invention;
FIG. 4 is a schematic view of a control platform according to an embodiment of the present invention;
FIG. 5 is a schematic view of a control platform according to another embodiment of the present invention;
FIG. 6 is a schematic view of a search engine according to an embodiment of the present invention;
FIG. 7 is a schematic view of a search engine registration information base according to an embodiment of the present invention; and
FIG. 8 is a schematic view of user information archive base according to an embodiment of the present invention.

### DETAILED DESCRIPTION OF THE EMBODIMENTS

The present invention provides a search method, device, and system, so as to improve the user experience.

According to an embodiment of the present invention, a control platform may select a corresponding search engine according to a search request of a user, and provide user information required by the search engine for carrying out search, so that the selected search engine may carry out search according to the user information and the search request, and thus the control platform may use various types of search engines to provide search service for a user in application, so as to improve the user experience.

Moreover, in other embodiments, in order to ensure security, the user information provided by the control platform to each search engine may not include user's identity, for example, private information such as name, ID number, and mobile phone number.

In order to make the present invention more comprehensible, the present invention is described in detail below with reference to the accompanying drawings and embodiments.

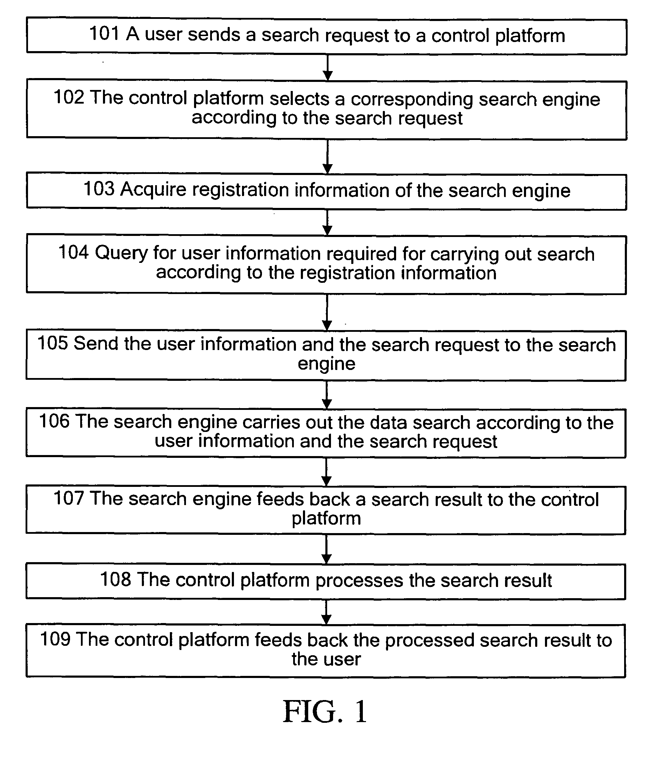

Specifically, referring to FIG. 1, the search method according to the present invention includes the following steps.

In step 101, a user sends a search request to a control platform.

When requesting for search related information, a user may send a search request to a control platform through a client, where the search request includes the search content desired by the user.

In step 102, the control platform selects a corresponding search engine according to the search request.

After receiving the search request sent from the user, the control platform determines a corresponding search engine according to the specific content in the search request. The specifically selected search engine may be one or more search engines. For example, if the search content requested by the user is a song name, a download address of the song may be directly searched by a multi-media search engine. It should be understood that, the specific means to determine a search engine according to the search request is included in the prior art, and is not limited herein.

In step 103, registration information of the search engine is acquired.

After selecting the search engine, the control platform acquires an identifier of the search engine, and queries for corresponding registration information of the search engine according to the identifier from a search engine registration information base. The registration information specifically includes, but is not limited to, interface information of the search engine and user information required by the search engine for carrying out data search, as well as other types of registration information. It should be noted that, in this embodiment, after acquiring the interface information of the search engine, the control platform may send a search condition to the search engine through an interface corresponding to the interface information.

It should be noted that, each search engine needs to perform registration in the search engine registration information base and store the registration information into the search engine registration information base before joining a system, where the control platform may provide a registration interface following a certain specification in registration. For convenience of illustration herein, Opensearch specification is taken as an example. The control platform may provide an OpenSearch standard interface for each search engine following the OpenSearch specification; integrate the user information into a template, for example, .xsd file of Extensive Markup Language (XML), and provide an extended interface of personalized information following the OpenSearch specification, so as to enable the search engine to perform registration, where in the registration, each search engine needs to describe own capability according to the OpenSearch specification (that is, dedicated to what kind of search) and the user information required by the search engine for carrying out data search. After registration, the member search engine indicates, to the control platform, the type of the user information intended to be acquired from the registration information base while issuing own capability. For example, if a certain search engine is configured to carry out weather search, in the registration, own search engine type is input and own capability is provided (that is, dedicated to weather search), so that the control platform may carry out search by using the search engine, and user information required for carrying out data search also needs to be described (for example, a location of a user initiating a search request).

In step 104, the user information required for carrying out search is queried for according to the registration information.

After acquiring the registration information of the search engine in step 103, the user information required by the search engine for carrying out search may be determined according to the registration information.

After determining the user information required by the search engine, the control platform may query for the corresponding user information. The specific query process may be as follows. The search request sent from the user to the control platform carriers a user identifier, the control platform queries for the user information from a user information archive base according to the user identifier and the registration information of each search engine, and sends the user information found and the search request to each search engine. It should be noted that, in order to improve user information security, the user information sent from the control platform to the search engine may only include the required user information described in registration of each search engine.

It should be noted that, the control platform may send the identifier of each search engine to the user information archive base so as to acquire corresponding personalized support information, after determining personalized support information required by the search engine from the search engine registration information base. It should be understood that, as the search engine registration information base may send the personalized support information and the search engine identifier of the search engine to the user information archive base after performing registration to the search engine, the control platform may also send the identifier of the search engine to the user information archive base. Accordingly, the user information archive base may also query for the corresponding personalized support information according to the identifier, and feed back the personalized support information to the control platform.

In step 105, the user information and the search request are sent to the search engines through a corresponding interface of the registration information.

In step 106, the search engine carries out data search according to the user information and the search request.

After acquiring the user information and the search request, the search engine may carry out data search according to these parameters.

In step 107, the search engine feeds back search results to the control platform.

After searching out corresponding search results, the search engine feeds back the search results to the control platform.

In step 108, the control platform processes the search results.

After receiving the search results, the control platform processes the search results, specifically, for example, by ranking, repeat removing (that is, removing the repeated results), and page integration.

Specifically, in a case that a weather search engine searches out several results respectively issued by different meteorological stations, after receiving these search results, the control platform needs to rank them, for example, top the search results of the Central Meteorological Station.

Likewise, in a case that the search results searched out by the weather search engine include identical results, only one of the identical results needs to be kept.

Furthermore, the control platform may also perform page integration to the searched results, so as to enable the integrated page to meet the demand of a user client, specifically, for example, by integrating character composition, or controlling the character number, as well as other integration behaviors, which is not limited here.

It should be noted that, if the control platform adds the personalized information to the search condition in sending the search condition to the search engine, the personalized information may be deleted in this step. For example, if the control platform adds "Location = Beijing" to the search condition, the content fed back from the control platform is merely "today's weather", instead of "q= Today's Weather; Location = Beijing". Therefore, the relevant personalized information may be omitted in this step, for example, the added search condition "Location = Beijing".

In step 109, the control platform feeds back the processed results to the user.

After processing the search results, the control platform feeds back the processed result to the user.

In the above embodiment, the control platform may select a corresponding search engine according to the search request of the user, and provide the user information required by the search engine for carrying out data search, so as to enable the search engine to accurately carry out the data search. Accordingly, the control platform may use various types of search engines to provide search service for a user in the application, and thus the user experience is improved.

To facilitate the understanding, the present invention is described with a specific example. In a case that a user sends, through a mobile terminal, a search request "Today's Weather" to a control platform, after receiving the search request "Today's Weather" sent from the user, the control platform retrieves a key word "Weather", and selects "Weather Search Engine" from the registered search engines so as to carry out data search. After selecting the "Weather Search Engine", the control platform acquires the weather search engine related registration information, and knows a type of user information required by the search engine is "User Location Information". The control platform acquires an identifier of the user according to the received search request, queries for the corresponding user information (user location information) from a user information archive base according to the identifier and the desired user information type (user location information), and sends the found user location information "Beijing" and the search request "Today's Weather" to the weather search engine. It should be noted that, in practical use, the control platform may regenerate a new search condition based on the user information and the search request, where the search condition meets the interface specification of the search engine described in registration, and is configured to request the weather search engine to search "q = Today's Weather; Location = Beijing", where q denotes the search request of the user, and location denotes title of a template element provided by a search engine registration information base. After searching out search results "Beijing, Sunny, 15 to 25 degrees Celsius", the weather search engine feeds back the search results to the control platform. For example, the search results fed back by the control platform to the user may be "Sunny, 15 to 25 degrees Celsius", with the search condition being "Today's Weather".

It should be noted that, if the control platform adds personalized information to the search condition in sending the search condition to the search engine, the personalized information may be deleted in this step. For example, if the control platform adds "Location=Beijing" to the search condition, the search content fed back from the control platform to the user is merely "Today's Weather", instead of "q= Today's Weather; Location = Beijing". Therefore, the relevant personalized information may be omitted in this step, for example, the added search condition "Location = Beijing".

In the above embodiment, if the control platform combines the personalized information with the search request so as to generate a search condition, and sends the search condition to the search engine, the search engine carries out search according to the search condition. It should be understood that, the control platform may also directly send the personalized information and the search request to the search engine, which in turn combines these information into a search condition so as to carry out search, and the specific process is not limited herein.

In the above embodiment, after acquiring the corresponding user information of the search engine, the control platform directly sends the user information and the search request of the user to the search engine, so that the search engine may carry out data search according to the user information and the search request. The above scheme can efficiently improve the user experience; however, a customized search exists in the search, that is the member search engine is required to send search information to the control platform regularly according to the condition pre-set by the control platform, and thus in the customized search, the user information needs to be acquired when each member search engine initiates search, due to the real time change of a part of user information, for example, location. Each search engine also needs to flexibly acquire the user information corresponding to the search engine according to the practical requirement of the search request. Therefore, in order to meet the demands of customized search, enabling the member search engine to flexibly acquire the personalized information, and ensuring user information security, the data search may be carried out by means of false ID information, where the false ID information refers to information sent from the control platform to the search engine to identify a certain user, which may be a string or other type. The search engine may query for the user information permitted to be acquired in registration according to the false ID information. However, the member search engine cannot infer the true identity, such as name and ID number, of the user according to the false ID.

In the above embodiment, the data search carrying out without false ID information is described, and the data search carrying out with false ID information is described hereinafter.

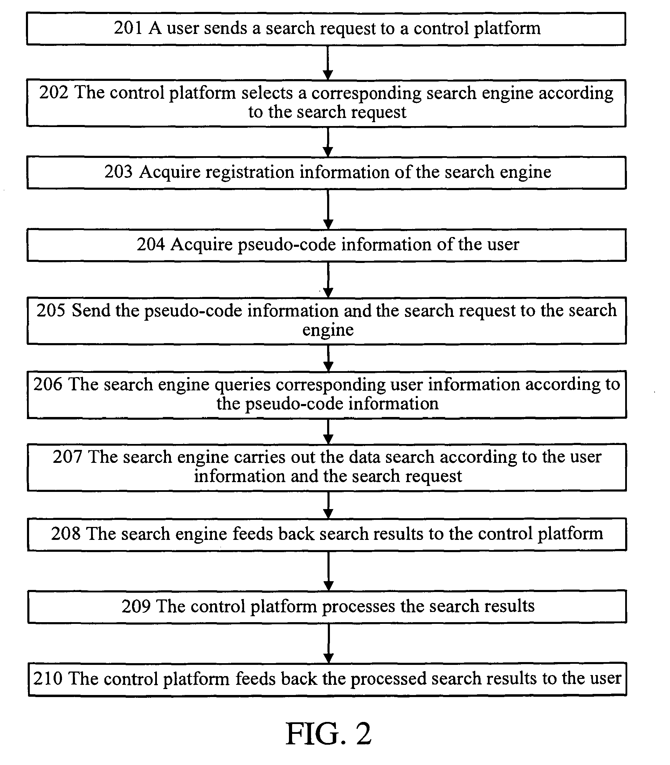

In this embodiment, requirement of using false ID information enables a search engine to flexibly acquire user information as desired, and may also meet the demand of customized search. According to this embodiment, the control platform acquires corresponding search engine registration information and false ID information of a user, and sends the false ID information and a search request of the user to the search engine. The search engine may query for the user information required for carrying out data search according to the false ID information, so that the data search may be carried out according to the user information and the search request. Specifically, referring to FIG. 2, another embodiment of the search method according to the present invention includes the following steps.

In step 201, a user sends a search request to a control platform.

When requesting for search related information, a user may send a search request to a control platform through a client, where the search request includes the search content desired by the user.

In step 202, the control platform selects a corresponding search engine according to the search request.

After receiving the search request sent from the user, the control platform determines a corresponding search engine according to the specific content in the search request. The specifically selected search engine may be one or more search engines. For example, if the search content requested by the user is a song name, a download address of the song may be directly searched by a multi-media search engine. It should be understood that, the specific means to determine a search engine according to the search request is included in the prior art, and is not limited herein.

In step 203, registration information of the search engine is acquired.

After selecting the search engine, the control platform acquires an identifier of the search engine, and queries for corresponding registration information of the search engine according to the identifier from a search engine registration information base. The registration information specifically includes, but is not limited to, interface information of the search engine as well as other types of registration information. It should be noted that, in this embodiment, after acquiring the interface information of the search engine, the control platform may send a search condition to the search engine through a corresponding interface of the interface information.

It should be noted that, each search engine needs to perform registration in the search engine registration information base before joining a system, and store the registration information into the search engine registration information base, where the control platform may provide a registration interface following a certain specification in registration. For convenience of illustration herein, OpenSearch specification is taken as an example. The control platform may provide an OpenSearch standard interface for each search engine following the OpenSearch specification; integrate the user information into a template, for example, .xsd file of XML, and provide an extended interface of personalized information following the OpenSearch specification, so as to enable the search engine to perform registration, where in registration, each search engine needs to describe own capability following the OpenSearch specification (that is, dedicated to what kind of search) and the user information required by the search engine for carrying out data search. After the registration, the member search engine acquires the type of the user information needed from the registration information base while issuing own capability. For example, if a certain search engine is configured to carry out weather search, in registration, own search engine type needs to be input and own capability to be provided (that is, dedicated to weather search), so as to enable the control platform to carry out search using the search engine, and user information required for carrying out data search also needs to be described (for example, a location of a user initiating a search request).

In step 204, false ID information of the user is acquired.

After acquiring the registration information of the search engine in step 203, false ID information of the user is acquired.

In step 205, the false ID information and the search request are sent, through a corresponding interface of the registration information to the search engine.

After acquiring the registration information (including the interface information) of the search engine, the control platform sends the false ID information found in the above step 204 and the previously acquired search request to the search engine.

It should be noted that, the control platform may combine the registration information, the false ID information, and the search request into a search condition, and send the search condition to the search engine.

In step 206, the search engine queries for corresponding user information according to the false ID information.

After acquiring the search condition of the search engine, the search engine resolves the search condition to acquire the false ID information, and queries for the corresponding user information according to the false ID information, specifically through querying, by the search engine, for the corresponding user information according to the false ID information from a user information archive base, where the user information is the user information described in registration of the search engine required for carrying out data search.

In step 207, the search engine carries out data search according to the user information and the search request.

After acquiring the user information and the search request, the search engine may carry out data search according to these parameters.

In step 208, the search engine feeds back search results to the control platform.

After searching out corresponding search results, the search engine feeds back the search results to the control platform.

In step 209, the control platform processes the search results.

After receiving the search results, the control platform processes the search results, specifically by ranking, repeat removing (that is, removing the repeated results), and page integration.

Specifically, in a case that the search engine searches out several results, after receiving these search results, the control platform needs to rank them, where numerous ranking strategies may exist, and different strategies may be used considering specific circumstances, for example, alternatively exhibiting the results fed back from different search engines, or integrating the highly weighted results of the different search engines into the same record.

Likewise, in a case that the search results searched out by the search engine include identical results, only one of the identical results needs to be kept.

Furthermore, the control platform may also perform page integration to the searched results, so as to enable the integrated page to meet the demand of a user client, specifically, for example, by integrating character composition, or controlling the character number, as well as other integration behaviors, which is not limited here.

It should be noted that, if the control platform adds the personalized information to the search condition in sending the search condition to the search engine, the personalized information may be deleted in this step.

In step 210, the control platform feeds back the processed results to the user.

After processing the search results, the control platform feeds back the processed results to the user.

To facilitate the understanding, the present invention is described with a specific example. In a case that a user sends, through a mobile terminal, a search request "Singer A" to a control platform, after receiving the search request "Singer A" sent from the user, the control platform retrieves a key word "Singer", and selects "Singer News Search Engine" and "Singer Song Search Engine" from the registered search engines so as to carry out data search. After selecting the "Singer News Search Engine" and the "Singer Song Search Engine", the control platform acquires the "Singer News Search Engine" and the "Singer Song Search Engine" related registration information. If false ID information of the user found is XXXX, the control platform sends a new search content including the search content and the false ID to the "Singer News Search Engine" and the "Singer Song Search Engine". For example, "q = Singer A; FalseID = XXXX", where "q = Singer A" denotes that the search content is Singer A, and "FalseID=XXXX" denotes that the false ID of the search user is XXXX. The "Singer News Search Engine" queries a user information archive base according to the false ID information XXXX, and finds that the age information of the initiator of the search request is 28 years, and the "Singer Song Search Engine" queries the user information archive base according to the false ID information XXXX, and finds that the gender of the initiator of the search request is male. After acquiring that the age of the initiator of the search request is 28 years, the "Singer News Search Engine" queries for the news contents of Singer A in corresponding age interval; and after acquiring that the gender of the initiator of the search request is male, the "Singer Song Search Engine" queries for songs suitable for the male in the corresponding songs of Singer A. The "Singer News Search Engine" feeds back the news contents of Singer A to the control platform, the "Singer Song Search Engine" feeds back the songs which are suitable for the male and are found from the songs of Singer A to the control platform, and the control platform processes the search results fed back from the engines and sends the processed results to the user.

According to this embodiment of the present invention, a control platform may select a corresponding search engine according to the search request of the user, and provide the user information required for carrying out data search for the search engine, so that the selected search engine may perform data search according to the user information and the search request, and thus the control platform may use various types of search engines to provide search service for a user in application, so as to improve the user experience.

Secondly, due to carrying out of the data search with the false ID information, the search engine cannot deduce all the user information through the false ID information of the user, in this way, the search engine is capable of flexibly acquiring the personalized information while meeting the demand of acquiring the personalized information in a customized search. Accordingly, requirement for diversely acquiring the user information may be met while ensuring the user information security.

Finally, the two manners may be combined in the practical use, that is, the control platform provides user information for each member search engine, and sends the false ID of the user at the same time, so that the search engine counts the search behavior of the user according to the false ID, and thus the search behavior of the user is traced more efficiently.

In the above two embodiments, the search request may take a Uniform Resource Locator (URL) mode, and the search request in such a coding mode is limited in length and parameter format. OpenSearch specification also designates to transfer request parameter employing XML structure, and employs multipart/form-data coding mode to meet the special requirements of the request parameters.

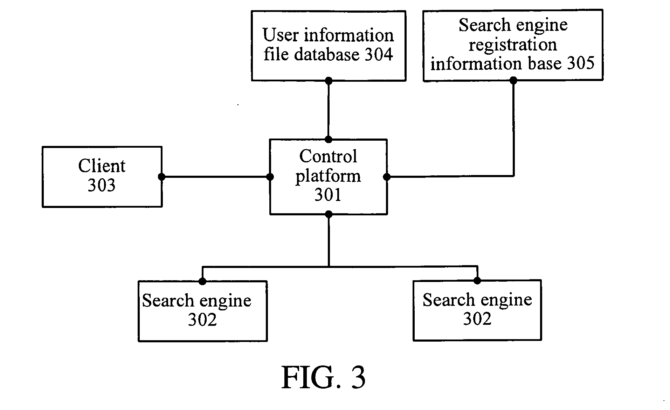

The search system according to the present invention is described below. Referring to FIG. 3, an embodiment of the search system according to the present invention includes a control platform 301, search engines 302, a client 303, a user information archive base 304, and a search engine registration information base 305.

The control platform 301 is configured to select a corresponding search engine according to a search request received from a user, query for user information required by the selected search engines 302 for carrying out search according to registration information of the selected search engines 302, and send the user information and the search request to the search engines 302.

The search engine 302 is configured to carry out the data search according to the user information and the search request received from the control platform 301, and feed back search results to the control platform 301.

The client 303 is configured to send the search request to the control platform 301, and receive the search results fed back from the control platform 301.

The user information archive base 304 is configured to provide the user information for the control platform.

The search engine registration information base 305 is configured to provide the registration information of the search engine for the control platform.

The above system search system is dedicated to a case where false ID information is not used. It should be understood that in a case in which the false ID information needs to be used, referring to FIG. 3, another embodiment of the search system according to the present invention includes a control platform 301, search engines 302, a client 303, a user information archive base 304, and a search engine registration information base 305.

The control platform 301 is configured to select an appropriate search engine 302 according to a search request received from a user, acquire registration information of the selected search engines 302, and send a search condition including the search request and false ID information of the user to the search engines 302.

The search engine 302 is configured to resolve the search condition so as to obtain the false ID information, acquiring user information required for carrying out search according to the false ID information, carry out data search according to the user information and the search request in the search condition, and feed back search results to the control platform 301.

The client 303 is configured to send the search request to the control platform 301, and receive the search results fed back from the control platform 301.

The user information archive base 304 is configured to provide the user information for the control platform, including the false ID.

The search engine registration information base 305 is configured to provide the registration information of the search engine for the control platform.

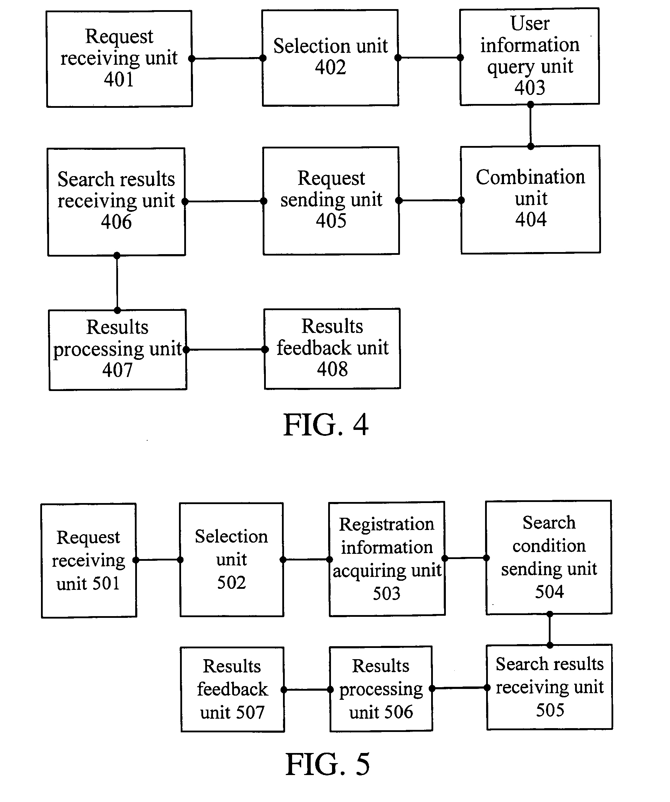

An embodiment of the control platform is described below. Referring to FIG. 4, the embodiment of the control platform according to the present invention includes a request receiving unit 401, a selection unit 402, a user information query unit 403, and a request sending unit 405.

The request receiving unit 401 is configured to receive a search request sent from a user.

The selection unit 402 is configured to select a corresponding search engine according to the search request received from the user.

The user information query unit 403 is configured to query for user information required by the selected search engine for carrying out search according to registration information of the selected search engine.

The request sending unit 405 is configured to send the user information and the search request to the search engine.

According to the embodiment of the present invention, the control platform further includes a combination unit 404.

The combination unit 404 is configured to combine the user information and the search request so as to obtain a search condition, and instruct the request sending unit to send the search condition to the search engine.

According to the embodiment of the present invention, the control platform further includes a search results receiving unit 406, a result processing unit 407, and a result feedback unit 408.

The search results receiving unit 406 is configured to receive search results fed back from the search engine.

The result processing unit 407 is configured to process the received search results.

The result feedback unit 408 is configured to feed back the processed search results to the user.

Referring to FIG. 5, another embodiment of the control platform according to the present invention includes a request receiving unit 501, a selection unit 502, a registration information acquiring unit 503, and a search condition sending unit 504.

The request receiving unit 501 is configured to receive a search request sent from a user.

The selection unit 502 is configured to select a corresponding search engine according to the search request received from the user.

The registration information acquiring unit 503 is configured to acquire registration information of the selected search engine.

The search condition sending unit 504 is configured to send a search condition including the search request and false ID information of the user to the search engine.

According to the embodiment of the present invention, the control platform further includes a search results receiving unit 505, a result processing unit 506, and a result feedback unit 507.

The search results receiving unit 505 is configured to receive search results fed back from the search engine.

The result processing unit 506 is configured to process the received search results.

The result feedback unit 507 is configured to feed back the processed search results to the user.

In the embodiments, a control platform may select a corresponding search engine according to the search request of the user, and provide the user information required for carrying out data search for the search engine, so that the selected search engine may perform data search according to the user information and the search request, and thus the control platform may use various types of search engines to provide search service for a user in application, so as to improve the user experience.

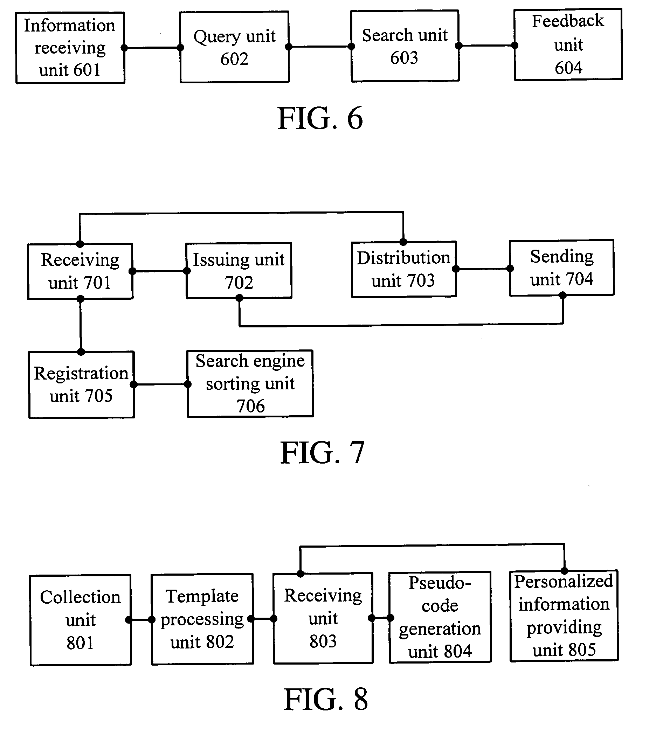

An embodiment of the search engine according to the present invention is described below. Referring to FIG. 6, the embodiment of the search engine according to the present invention includes an information receiving unit 601, a query unit 602, and a search unit 603.

The information receiving unit 601 is configured to receive false ID information and a search request sent from a control platform.

The query unit 602 is configured to query for user information required for carrying out search, from a user information archive base according to the received false ID information.

The search unit 603 is configured to search data according to the user information found and the search request, so as to obtain search results.

In this embodiment, the search engine further includes a feedback unit 604.

The feedback unit 604 is configured to feed back the search results to the control platform.

An embodiment of the search engine registration information base according to the present invention is described below. Referring to FIG. 7, the embodiment of the search engine registration information base according to the present invention includes a receiving unit 701, an issuing unit 702, a distribution unit 703, and a sending unit 704.

The receiving unit 701 is configured to receive own capability information and personalized support information sent from a search engine, and receive a personalized information template sent from a user information archive base.

The issuing unit 702 is configured to issue the personalized support information of the search engine according to the personalized information template.

The distribution unit 703 is configured to distribute an identifier to the search engine.

The sending unit 704 is configured to send the identifier of the search engine and the personalized support information acquired by the search engine to the user information archive base.

In this embodiment, the search engine registration information base further includes a registration unit 705 and a search engine sorting unit 706.

The registration unit 705 is configured to provide interface for different search engines, so as to enable each search engine to generate a registration file with suitable specification, and save registration information of each search engine.

The search engine sorting unit 706 is configured to sort the registered search engines.

Generally, the main function process of the search engine registration information base includes the following.

The receiving unit 701 receives the personalized template provided by the user information archive base, and issues personalized support ability according to the template, that is, the user information required by each search engine for carrying out data search. The receiving unit 701 also needs to receive special personalized information of the registered search engine. The registration unit 705 provides interface for different search engines following specification (for example, OpenSearch), so as to enable each search engine to generate a registration file with suitable specification, and save registration information of each search engine, thus completing the registration of the search engine. The distribution unit 703 generates an identifier for each search engine. The sending unit 704 feeds back the identifier and the personalized support information (that is the user information required by each search engine for carrying out data search) acquired by each search engine to the user information archive base. After each search engine completes the registration, the search engine sorting unit 706 sorts the registered search engines.

An embodiment of the user information archive base according to the present invention is described below. Referring to FIG. 8, the embodiment of the user information archive base according to the present invention includes a collection unit 801, a template processing unit 802, and a receiving unit 803.

The collection unit 801 is configured to collect personalized information from each personalized information source.

The template processing unit 802 is configured to generate a personalized information template according to the personalized information, and send the personalized information template to a search engine registration information base.

The receiving unit 803 is configured to receive an identifier of a search engine and personalized support information acquired by the search engine, sent from the search engine registration information base.

The embodiment of the user information archive base further includes a false ID generation unit 804, and a personalized information providing unit 805.

The false ID generation unit 804 is configured to generate false ID information for each user.

The personalized information providing unit 805 is configured to provide personalized information according to the right of each search engine.

Generally, the main function process of the user information archive base includes the following.

The collection unit 801 collects the personalized information, and sends the collected personalized information to the template processing unit 802. The template processing unit 802 generates the personalized information template according to the personalized information so as to enable the generated personalized information template to meet the requirement of the search engine, and send the personalized information template to the search engine registration information base. Then, the receiving unit 803 receives the personalized request of the search engine, and instructs the personalized information providing unit 805 to organize the required personalized information. It should be noted that the false ID generation unit 804 may also provide the false ID information of the user, so as to further improve the user information security.

According to the system of this embodiment, the network element connected to the user information archive base may be a user browser history recording unit, a user registration information base, and a user information server, and these network elements function to provide the personalized information for the user information archive base.

For example, the user information archive base may, for example, analyze the preference of a user according to the user browser history recording unit; acquire the personalized information of a user in other service fields from the user information server; and acquire static registration information of a user from the user registration information base.

Information interaction between the user information archive base and each personalized information source (that is, the above three network elements) needs to be authenticated depending on the importance of the personalized information, so as to prevent the personalized information from leakage. In a case that a user is authorized to acquire trade information of the user from a bank system to optimize search results, the following security strategy may be employed. A transport layer uses Transport Layer Security (TLS), and an application layer uses Hyper Texture Transport Protocol (HTTP) based protocol, so as to perform information interaction. In order to guarantee the user's right, in this case, the user needs to request a relevant service information query certificate from the bank system, and submits the certificate to the user information archive base for management. When the user information archive base needs to acquire the trade information of a user, the following reference steps are performed.

The user information archive base encrypts the data of the transport layer linked between the user information archive base and the bank system using TLS protocol according to the certificate requested by the user.

The user information archive base uses HTTP authentication protocol to authenticate the application layer linked between the user information archive base and the bank system.

Dual authentications of the application layer and the transport layer guarantee the security of the import privacy information of the user. Furthermore, the user information archive base may also process the acquired user information, for example, analyze the range of the month consumption line of the user according to the user's trade information, so that the range of the consumption line is transferred to a specific search engine in practical use, and thus the privacy information of the user may be further guaranteed from being leaked.

As different systems may adopt different security strategies, the user information archive base will determine the security strategy according to the practical situation of a system in specific application.

Persons of ordinary skill in the art understand that all or part of the steps of the method in the embodiments of the present invention may be implemented by a program instructing relevant hardware. The program may be stored in a computer readable storage medium. When the program is executed, the following steps are performed.

A control platform selects a corresponding search engine according to a search request received from a user.

The control platform acquires user information required by the selected search engine for carrying out search.

The control platform sends the user information and the search request to the search engine, so as to enable the search engine to carry out the data search according to the user information and the search request.

The above storage medium may be a read-only memory (ROM), a magnetic disk or a compact disk read-only memory (CD-ROM).

The search method, device, and system according to the present invention are described in detail above. Person having ordinary skill in the art can make variations and modifications to the present invention in terms of specific implementations and application scopes according to the ideas of the present invention. Therefore, the specification shall not be construed as limitations to the present invention.

## Claims

1. A search method, comprising:
selecting, by a control platform, a corresponding search engine according to a search request received from a user;
acquiring, by the control platform, user information required by the selected search engine for carrying out search; and
sending, by the control platform, the user information and the search request to the search engine, so as to enable the search engine to carry out the data search according to the user information and the search request.

2. The method according to claim 1, wherein the acquiring, by the control platform, the user information required by the selected search engine for carrying out search comprises:
querying, by the control platform, for the user information acquired by the search engine for carrying out search, according to registration information of the selected search engine.

3. The method according to claim 1, wherein the acquiring, by the control platform, the user information required by the selected search engine for carrying out search comprises:
acquiring, by the control platform, false ID information of the user as the user information required by the search engine for carrying out search.

4. The method according to any one of claims 1 to 3, wherein the method further comprises: acquiring, by the control platform, interface information of the selected search engine; and
the sending, by the control platform, the user information and the search request to the search engine comprises:
combining, by the control platform, the user information, the search request, and the interface information of the search engine, so as to obtain a search condition; and
sending, by the control platform, the search condition to the search engine.

5. The method according to claim 4, wherein after the sending, by the control platform, the search condition to the search engine, the method further comprises:
receiving, by the control platform, search results fed back from the search engine; and
feeding back, by the control platform, the search results to the user.

6. The method according to claim 5, wherein
after the receiving, by the control platform, the search results fed back from the search engine, and before the feeding back the search results to the user, the method further comprises: resolving, by the control platform, the search results fed back from the search engine, recording and ranking, and page integrating so as to obtain the final search results; and
the feeding back, by the control platform, the search results to the user comprises: feeding back, by the control platform, the final search results to the user.

7. The method according to claim 5, wherein before the sending, by the control platform, the search condition to the search engine, the method further comprises:
querying, by the control platform, for personalized information of the user; and
adding, by the control platform, the personalized information to the search condition.

8. The method according to claim 7, wherein after receiving, by the control platform, the search results fed back from the search engine, and before the feeding back the search results to the user, the method further comprises:
deleting, by the control platform, the personalized information from the search results fed back from the search engine.

9. The method according to claim 2, wherein the querying, by the control platform, for the user information acquired by the search engine for carrying out search, according to the registration information of the selected search engine comprises:
acquiring, by the control platform, the registration information of the search engine; and
querying, by the control platform, for the user information corresponding to the registration information from a user information archive base according to the registration information, and using the user information as the user information required by the search engine for carrying out search.

10. The method according to claim 3, wherein after the sending, by the control platform, the user information and the search request to the search engine, the method further comprises:
acquiring, by the search engine, the user information required for carrying out search according to the false ID information; and
carrying out, by the search engine, the data search according to the user information and the search request in the search condition.

11. The method according to claim 1, further comprising:
receiving, by a search engine registration information base, own capability information and personalized support information sent from the search engine, and receiving a personalized information template sent from the user information archive base;
issuing, by the search engine registration information base, the personalized support information of the search engine according to the personalized information template; and
distributing, by the search engine registration information base, an identifier to the search engine, and sending the identifier of the search engine and the personalized support information acquired by the search engine to the user information archive base.

12. The method according to claim 1, further comprising:
collecting, by the user information archive base, the personalized information from each personalized information source;
generating, by the user information archive base, the personalized information template according to the personalized information, and sending the personalized information template to the search engine registration information base; and
receiving, by the user information archive base, the identifier of the search engine and the personalized support information acquired by the search engine, sent from the search engine registration information base.

13. A search system, comprising:
a control platform, configured to select a corresponding search engine according to a search request received from a user, acquire user information required by the selected search engine for carrying out search, and send the user information and the search request to the search engine; and
a search engine, configured to carry out the data search according to the user information and the search request received from the control platform, and feed back search results to the control platform.

14. The search system according to claim 13, wherein the control platform queries for the user information required by the search engine for carrying out search, according to registration information of the selected search engine.

15. The search system according to claim 13, wherein
the control platform acquires false ID information of the user, and uses the false ID information as the user information required by the search engine for carrying out search; and
the search engine is also configured to acquire the user information required by the search engine for carrying out search according to the false ID information.

16. The search system according to any one of claims 13 to 15, further comprising:
a user information archive base, configured to provide the user information for the search engine; and
a search engine registration information base, configured to provide the registration information of the search engine for the control platform.

17. A control platform, comprising:
a request receiving unit, configured to receive a search request sent from a user;
a selection unit, configured to select a corresponding search engine according to the search request sent from the user;
a user information query unit, configured to query for the user information required by the selected search engine for carrying out search according to registration information of the search engine; and
a request sending unit, configured to send the user information and the search request to the search engine.

18. The control platform according to claim 17, further comprising:
a combination unit, configured to combine the user information and the search request to obtain a search condition, and instruct the request sending unit to send the search condition to the search engine.

19. The control platform according to claim 17 or 18, further comprising:
a search results receiving unit, configured to receive search results fed back from the search engine;
a result processing unit, configured to process the received search results; and
a result feedback unit, configured to feed back the processed search results to the user.

20. A control platform, comprising:
a request receiving unit, configured to receive a search request sent from a user;
a selection unit, configured to select a corresponding search engine according to the search request received from the user;
a registration information acquiring unit, configured to acquire registration information of the selected search engine; and
a search condition sending unit, configured to send, through a corresponding interface of the registration information, a search condition including the search request and false ID information of the user, to the search engine.

21. The control platform according to claim 20, further comprising:
a search results receiving unit, configured to receive search results fed back from the search engine;
a result processing unit, configured to process the received search results; and
a result feedback unit, configured to feed back the processed search results to the user.

22. A search engine, comprising:
an information receiving unit, configured to receive false ID information and a search request sent from a control platform;
a query unit, configured to query for user information required for carrying out search, from a user information archive base according to the received false ID information;
a search unit, configured to search data according to the user information found and the search request, so as to obtain search results; and
a feedback unit, configured to feed back the search results to the control platform.

23. A search engine registration information base, comprising:
a receiving unit, configured to receive own capability information and personalized support information sent from a search engine, and receive a personalized information template sent from a user information archive base;
an issuing unit, configured to issue the personalized support information of the search engine according to the personalized information template;
a distribution unit, configured to distribute an identifier to the search engine; and
a sending unit, configured to send the identifier of the search engine and the personalized support information acquired by the search engine to the user information archive base.

24. The search engine registration information base according to claim 23, further comprising:
a registration unit, configured to provide interfaces for different search engines to enable each search engine to generate a registration file with suitable specification, and save registration information of each search engine; and
a search engine sorting unit, configured to sort the registered search engine.

25. A user information archive base, comprising:
a collection unit, configured to collect personalized information from each personalized information source;
a template processing unit, configured to generate a personalized information template according to the personalized information, and send the personalized information template to a search engine registration information base; and
a receiving unit, configured to receive an identifier of a search engine and personalized support information acquired by the search engine, sent from the search engine registration information base.

26. The user information archive base according to claim 25, further comprising:
a false ID generation unit, configured to generate false ID information for each user; and
a personalized information providing unit, configured to provide personalized information according to a right of each search engine.
